# EUROPEAN PATENT SPECIFICATION

(11) **EP 1 843 543 B1**
(45) Date of publication and mention of the grant of the patent: **12.12.2018**
(21) Application number: 06300335.4
(22) Date of filing: 06.04.2006
(51) Int. Cl.: H04L 29/06, H04L 12/58

(54) **Method, apparatus and system for authentication on peer-to-peer file sharing network**
Verfahren, Vorrichtung und System zur Authentifizierung in einem Peer-to-Peer Datei-Austausch Netzwerk
Procédé, dispositif et système d'authentification pour un réseau de partage de fichiers poste à poste

(43) Date of publication of application: 10.10.2007
(73) Proprietor: Google Technology Holdings LLC, Mountain View, CA 94043 (US)
(72) Inventor: Ehrhart, François-Xavier, 31100 Toulouse (FR); Arnal, Julien, 31830 Plaisance du Touch (FR); HANSEN, Mark D., BUFFALO GROVE, IL 60089 (US)
(74) Representative: Boult Wade Tennant LLP

(56) References cited:
- US-A1- 2004 034 776
- US-A1- 2004 083 297
- US-A1- 2004 255 121

## Description

### FIELD OF THE INVENTION

The present invention relates to networking and, more particularly, relates to peer-to-peer (P2P) networking.

### BACKGROUND OF THE INVENTION

Peer-to-peer (P2P) networks are currently used widely in the personal computer world and in connection with the Internet. Additionally, it is expected that P2P networks will also become widely used in connection with mobile/wireless telephones and other wireless devices. P2P networks generally have an architecture in which multiple computers, workstations or other computerized devices share in common the same capabilities and responsibilities and communicate with one another essentially as equals or "peers".

Various types of P2P networks are available today, including those that afford instant messaging (IM), file-sharing (FS), and distributed computing capabilities. P2P FS networks in particular make it possible for a large number of peers to search for, browse, access and download large numbers of files that are stored by one another. Conventional P2P FS networks are designed to allow all peers to have equal, essentially unrestricted access to the files of one another. Often, conventional P2P FS networks allow for searches to be formed with respect to a large number of peers, allow simultaneous downloads from multiple sources, and allow peers to share files while they are downloading them. Typically P2P FS networks have no central server.
Although allowing unrestricted access to files in this manner is appropriate and desirable in many circumstances, this is not always the case. Indeed, there are a variety of circumstances in which a given peer might desire to make files available to certain specific parties and yet not make those files available to all parties that may be capable of communicating on the P2P FS network. For example, this might be the case when the files are of a confidential, private, personal or family-related nature.

Nevertheless, while some other P2P networks make it possible for a given peer to create restrictions limiting which other peers are able to communicate with it, conventional P2P FS networks generally have no such restrictions and do not allow for such restrictions. Although a few P2P FS networks allow a given peer to differentiate among other peers on the network, in general such P2P FS networks still do not allow the given peer to restrict access to a particular subset of peers on the network. Moreover, the differentiation that does occur generally is internal to the P2P FS networks and identifies applications instead of users, and consequently is of limited benefit as users switch among devices or applications (e.g., as their identities change).

For example, while the eDonkey2000/Overnet P2P FS network available from MetaMachine, Inc. of New York, NY includes an "Add Friends" feature, that feature does not allow a peer to limit access to its files to only those other peers that are listed as "friends". Nor does it allow a peer to easily find one of its friends. Rather, the feature merely allows a peer to identify other eDonkey users, to chat with those users, and/or to provide the users with more bandwidth.

As for the other types of conventional P2P networks that do allow for restrictions to be placed on how different peers communicate, these P2P networks fail to provide the benefits that are available from P2P FS networks. For example, while some P2P IM networks allow for private communications between peers, and further allow files to be sent from one peer to another, such networks do not allow a peer to independently search, browse or access the files of another peer as can be achieved with P2P FS networks. In particular, no P2P IM networks provide a search for files on the whole network nor download from multiple sources simultaneously.

Therefore, for at least the above reasons, it would be advantageous if a new type of P2P networking method and system could be developed. More particularly, it would be advantageous if such a new method and system not only achieved the benefits of conventional P2P FS networks in terms of facilitating the searching, browsing, accessing and/or downloading of files existing at a variety of peers, but also allowed peers to (in at least some circumstances) restrict access to their files to only certain other peers.

Other examples of peer-to-peer networks are given by the prior art documents US2004034776 and US2004255121. Patent application US2004034776 discloses a method and system that employs authenticated connections between each of multiple peer devices and an instant messaging server for establishing and authenticating a peer connection, e.g. for a file sharing application, between the peer devices. In US2004255121, a communication according to the Short Message Service standard is used to provide authentication information for establishing a direct communication between two devices.

### BRIEF SUMMARY OF THE INVENTION

The present inventors have recognized that many computerized devices which operate in conjunction with P2P networks, and which in particular are configured to communicate via P2P FS networks, are configured for (or capable of being configured for) communications via authenticated P2P networks (e.g., P2P IM networks) as well. The present inventors have further recognized that an authenticated P2P network relationship between such computerized devices could be leveraged to allow for authenticated communications via a P2P FS network. More particularly, the present inventors have recognized that a given computerized device could meaningfully restrict the accessing of its files by way of a P2P FS network by requiring that any other computerized device attempting access via a P2P FS network provide a special identification code or the like that was generated by the given computerized device and was provided to the accessing computerized device by way of an independent authenticated P2P network (for example, a P2P IM network) linking those two devices.

The present invention is defined according to the appended set of claims. In at least some embodiments, the present invention relates to a method of authenticating a first peer-to-peer ("P2P") file sharing application. The method includes (a) providing an identifier from a second P2P file sharing application to a second authenticated application associated therewith, and (b) transmitting the identifier from the second authenticated application for receipt by a first authenticated application and subsequently by the first P2P file sharing application with which the first authenticated application is associated. The method further includes (c) receiving the identifier at the second P2P file sharing application from the first P2P file sharing application subsequent to the transmitting of the identifier in (b), and (d) authenticating the first P2P file sharing application if the identifier received in (c) corresponds to that provided in (a).

Additionally, in at least some embodiments, the present invention relates to a method of authenticating a first peer-to-peer ("P2P") file sharing application. The method includes (a) transmitting a first signal from the first P2P file sharing application or a first authenticated application associated therewith for receipt by a second P2P file sharing application or a second authenticated application associated therewith, respectively, and (b) receiving at the first authenticated application an identifier that was provided from the second authenticated application. The method also includes (c) communicating the identifier from the first authenticated application to the first P2P file sharing application, and (d) transmitting the identifier or a signal based upon the identifier for receipt by the second P2P file sharing application. Subsequently, the first P2P file sharing application is allowed to access information by way of the second P2P file sharing application.

Further, in at least some embodiments, the present invention relates to an apparatus allowing for authentication of a first peer-to-peer (P2P) file sharing application. The apparatus includes a processing device on which is operating a second P2P file sharing application and a second authenticated program that is associated with the second P2P file sharing application. The second P2P file sharing application is configured to provide an identifier to the second authenticated program, and the second authenticated program is configured to transmit the identifier to a first authenticated program associated with the first P2P file sharing application. Also, the authentication of the first P2P file sharing application occurs after the second P2P file sharing application receives the identifier back from the first P2P file sharing application.

### BRIEF DESCRIPTION OF THE DRAWINGS

FIG. 1 is a simplified illustration of an exemplary networked group of computerized devices that are configured to allow for authenticated communications via a P2P FS network in accordance with at least some embodiments of the present invention;
FIG. 2 is a block diagram showing exemplary components of one of the computerized devices of FIG. 1;
FIG. 3 is a mixed block/signal flow diagram showing in schematic form two of the computerized devices of FIG. 1, each of which has an authenticated application and a P2P FS application, where the P2P FS application of one of the devices is authenticated by the P2P FS application of the other of the devices in a first manner;
FIG. 4 is a mixed block/signal flow diagram showing in schematic form two of the computerized devices of FIG. 1, each of which has an authenticated application and a P2P FS application, where the P2P FS application of one of the devices is authenticated by the P2P FS application of the other of the devices in a second manner that differs from the first manner of FIG. 3;
FIG. 5 is a flow chart showing exemplary steps of operation of the computerized devices of FIG. 3 in performing the first manner of authentication; and
FIG. 6 is a flow chart showing exemplary steps of operation of the computerized devices of FIG. 4 in performing the second manner of authentication.

### DETAILED DESCRIPTION OF THE INVENTION

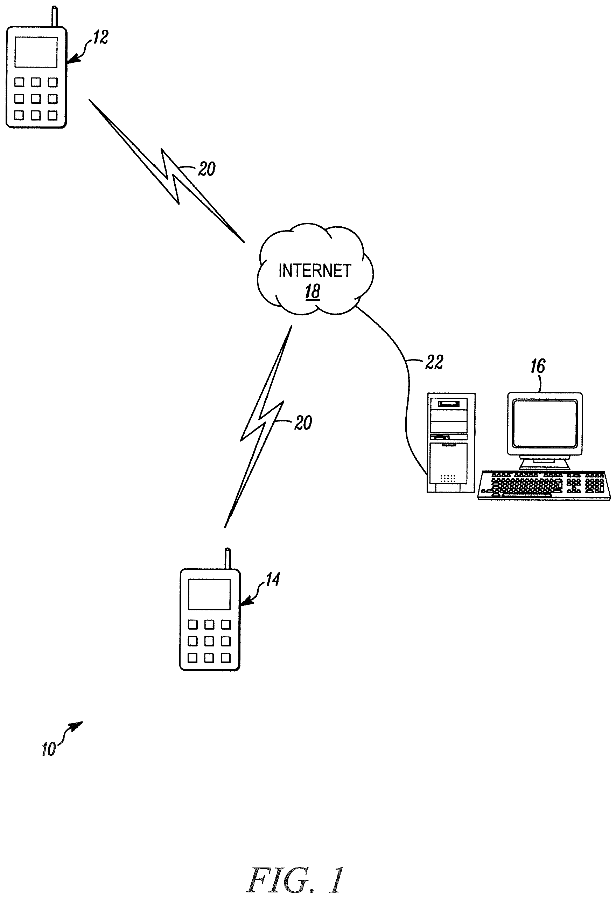

Referring to FIG. 1, an exemplary communications system 10 is shown in which three computerized devices are in communication and networked with one another. In the particular embodiment shown, two of the three devices are first and second cellular telephones 12 and 14, respectively, while the third of the devices is a personal computer 16. The three computerized devices 12, 14 and 16 are all coupled with one another by way of the Internet 18, with each of the cellular telephones 12 and 14 being respectively coupled to the Internet by way of respective wireless communication links 20 and the computer 16 being coupled to the Internet by way of a hard-wired connection 22. As will be described in further detail below, the computerized devices 12, 14 and 16 communicate at least in part by way of one or more peer-to-peer ("P2P") networks.

Although FIG. 1 shows the system 10 to include the particular computerized devices 12, 14 and 16 shown in FIG. 1 and also shows those devices to be linked by way of the Internet 18 and the particular links 20 and 22, it should be understood that this embodiment is only exemplary and the present invention is intended to encompass any and all possible groupings of networked computerized devices that communicate at least in part by way of one or more P2P networks. Thus, the present invention is intended to encompass embodiments of systems having any number of computerized devices that are capable of P2P communications ranging from two devices to possibly thousands or more computerized devices. Also, while the present embodiment shows two devices of the system 10 to be cellular telephones and one of the devices to be a personal computer, the present invention is also intended to encompass systems in which one or more of the computerized devices is/are any of a number of different types of devices including, for example, other wireless handheld devices such as personal digital assistance (PDAs), laptop or other portable personal computers that are enabled for wireless communications, other forms of computers including desktop computers, more powerful types of computers including mainframe computers, as well as less powerful computerized devices such as workstations.

Further, although FIG. 1 shows the computerized devices of the system 10 as being networked by way of the Internet 18, the present invention is also intended to encompass any embodiment in which two or more computerized devices intercommunicate by way of one or more P2P networks, regardless of whether the underlying network is the Internet or follows any other particular communication protocol or format. Also, notwithstanding the showing of the wireless communication links 20 and the hardwired link 22 in FIG. 1, the present invention is intended to also apply to any computerized devices that communicate by way of one or more P2P networks, regardless of the particular medium or physical layers by which such communication occurs.

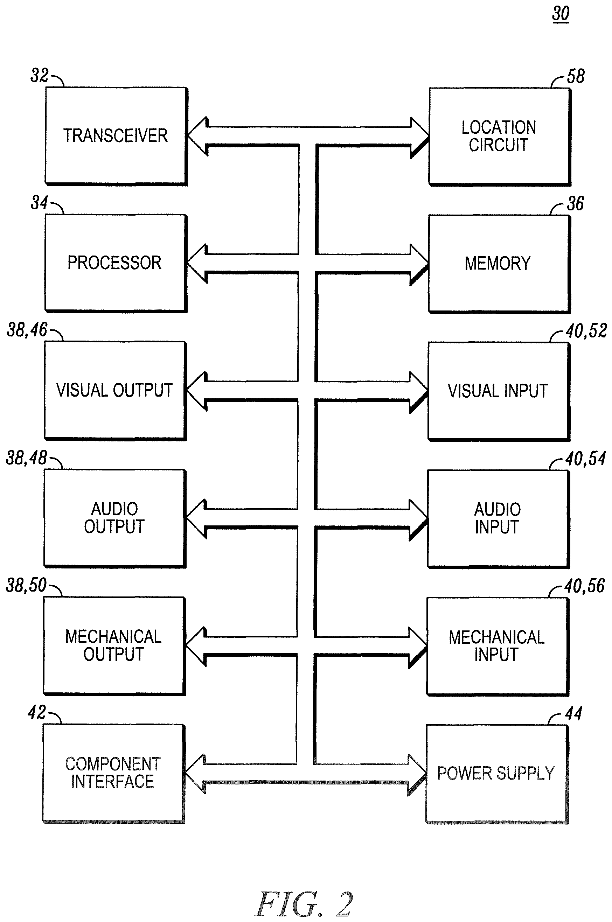

Referring to FIG. 2, there is provided a block diagram illustrating exemplary internal components 30 of the first cellular telephone 12 of FIG. 1. Although particularly intended to be representative of the internal components of the first cellular telephone 12, the block diagram is equally representative of the internal components of the second cellular telephone 14, and is further intended to be representative of the internal components of other wireless or mobile devices other than cellular telephones, for example, wireless personal digital assistants or other handheld devices. Also, it will be understood that the computer 16 shown in FIG. 1 has or can have many or all of the same (or similar) components as are shown to be included in FIG. 2 as being part of the cellular telephone 12 and as are described in further detail below.

As shown in FIG. 2, the internal components 30 of the first cellular telephone 12 include one or more wireless transceivers 32, a processor 34, a memory portion 36, one or more output devices 38, and one or more input devices 40. The processor 34 can be any of a variety of different processing devices including, for example, a microprocessor. In at least some embodiments, the internal components 30 include a user interface (not shown) that comprises one or more output devices 38 and one or more input devices 40. Each transceiver 32 can utilize any of a variety of different wireless technologies for communication, for example, long-range wireless communications technologies such as CDMA or GSM as well as short-range wireless communications technologies such as BlueTooth technology. The internal components 30 can further include a component interface 42 to provide a direct connection to auxiliary components or accessories for additional or enhanced functionality. The internal components 30 preferably further include a power supply 44, such as a battery, for providing power to the other internal components while enabling the overall cellular telephone to be portable.

The internal components 30 can operate in conjunction with one another to perform a number of functions. For example, upon reception of wireless signals, the internal components 30 detect communication signals and the transceiver 32 demodulates the communication signals to recover incoming information, such as voice data and/or other data, transmitted by the wireless signals. After receiving the incoming information from the transceiver 32, the processor 34 formats the incoming information for the one or more output devices 38 and/or for storage in the memory 36. Similarly, for transmission of wireless signals, the processor 34 formats outgoing information, which can (but need not) be activated by the input devices 40, and conveys the outgoing information to the transceiver 32 for modulation to communication signals.

Further as shown in FIG. 2, the input and output devices 38, 40 of the internal components 30 can include a variety of types of visual, audio and/or mechanical input and output devices. For example, the output device(s) 38 can include a visual output device 46 such as a liquid crystal display or a light emitting diode indicator, an audio output device 48 such as a speaker, alarm and/or buzzer, and/or a mechanical output device 50 such as a vibrating mechanism. Likewise, by example, the input devices 40 can include a visual input device 52 such as an optical sensor (for example, a camera), an audio input device 54 such as a microphone, and a mechanical input device 56 such as a flip sensor, keyboard, keypad, selection button, touch pad, touch screen, capacitive sensor, motion sensor, and switch. Actions that actuate one or more of the input devices 40 can include, but are not limited to, opening of the cellular telephone, unlocking the device, moving the device to actuate a motion, moving the device to actuate a location positioning system, pressing of a button on the device, and operating the device. Additionally as shown in FIG. 2, the internal components 30 can also include a location circuit 58. Examples of the location circuit 58 include, but are not limited to, a Global Positioning System (GPS) receiver, a triangulation receiver, an accelerometer, a gyroscope, or any other information-collecting device that can identify a current location of the cellular telephone 12 (or of one or more of its internal components 30).

The memory portion 36 of the internal components 30 can include any number of a variety of different types of memory devices such as random access memory (RAM) devices, and can be used to store and retrieve data. Typically, although not necessarily, operation of the memory portion 36 in storing and retrieving data is governed by commands from the processor 34. The data that is stored by the memory portion 36 can include, but need not be limited to, operating systems (or other systems software), applications, and data. Each operating system in particular includes executable code that controls basic functions of the cellular telephone, such as interaction among the various internal components 30, communication with external devices via the transceiver 32 and/or the component interface 42, and storage and retrieval of applications and data to and from the memory portion 36.

As for the applications, each application includes executable code that operates in conjunction with the operating system to provide more specific functionality for the cellular telephone 12, such as file system service and handling of protected and unprotected data stored in the memory portion 36. Exemplary applications can include, for example, a discovery application for discovering media on behalf of a user and his/her phone and a download user agent responsible for downloading the media object described by the download descriptor. As described in more detail below, these applications can also include P2P networking applications such as P2P file-sharing (FS) applications and P2P instant messaging (IM) applications. The applications can also include application files that are downloaded from another source by way of the P2P FS sharing applications.

As for the data that is potentially stored in the memory 36, such data can include, for example, non-executable code or information that can be referenced and/or manipulated by an operating system or application for performing functions of the cellular telephone 12. Also, such data can include data files that are downloaded from another source by way of P2P FS applications, as well as data that is obtained by way of another P2P application (for example, an IM application) or non-P2P application. The data files can include files having data with any of a variety of formats, purposes, types or uses including, for example, audio files, photographic or image files, text files, or other data files.

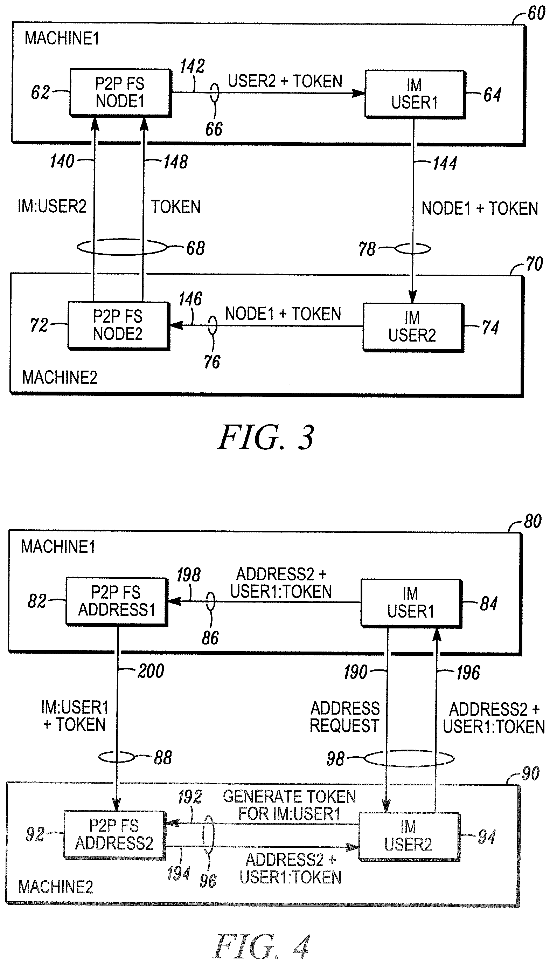

Turning to FIGS. 3 and 4, two mixed block/signal flow diagrams are provided that show two alternate manners of P2P network communications by which any two computerized devices (such as any two of the devices of the communication system 10 of FIG. 1) can communicate, in accordance with at least some embodiments of the present invention. With respect to FIG. 3 in particular, a first computerized device 60 includes a first P2P FS application 62 referred to as "node 1" and a second, authenticated application that in the present embodiment is a P2P IM application 64 that is referred to as "user 1". The P2P FS application 62 and the P2P IM application 64 are associated with and in communication with one another, as represented symbolically by a communication link 66. It will be understood that, in many embodiments, the P2P FS and IM applications 62 and 64 are actually performed by way of the same processing device and/or stored on the same memory device, such that the communication link 66 merely is indicative of the fact that the two applications are discrete software applications that are linked functionally. Nevertheless, the present invention is also intended to encompass embodiments in which the P2P FS application 62 and the P2P IM application 64 are performed by different processing devices and/or stored on distinct memory devices, which can exist on a shared computerized device or other machine, or even possibly on separate computerized devices or machines that are potentially at different or remote locations from one another. Although in the present embodiments the P2P IM application 64 is shown to be the authenticated application that is in communication with the P2P FS application 62, in alternate embodiments other authenticated applications allowing for private or restricted communications between one computerized device and another computerized device could also be employed. The P2P IM application is shown to be used in the present embodiment since P2P IM applications are already commonly in use to allow peers to communicate private or otherwise restricted-access messages to other peers.

Further as shown in FIG. 3, the first computerized device 60 is in communication with a second computerized device 70 that, like the first computerized device, includes both a second P2P FS application 72 referred to as "node 2" and a second authenticated application that is a P2P IM application 74 referred to as "user 2". As with respect to the applications 62 and 64, the two applications 72 and 74 are associated with and in communication with one another by a communication link 76. By stating that the respective P2P FS applications 62, 72 are associated with their respective P2P IM applications 64, 74 (or with other authenticated applications in other embodiments), it is intended that the associated applications of each pair not merely be in communication with one another but also be related or affiliated with one another in a functionally close manner such that communications passed between the associated applications not be shared with other applications, or at least not be shared with other applications that do not have the same type of close relationship. That is, the associated applications 62 and 64 are closely affiliated such that the applications communicate on a confidential or substantially confidential basis. Likewise, the associated applications 72 and 74 are closely affiliated such that the applications communicate on a confidential or substantially confidential basis.

Further as shown in FIG. 3, the respective P2P FS applications 62 and 72 of the computerized devices 60 and 70, respectively, are in communication by way of a P2P FS network technology such as eDonkey2000, Gnutella, Gnutella2, or FastTrack, among others, and this P2P networking connection is represented by a communication link 68. Thus, the P2P FS applications 62, 72 can be any type of P2P FS application that is capable of operating in relation to the particular P2P network technology that is being employed, for example, an eDonkey2000 application, a Gnutella application, a Gnutella2 application, or a Kazaa application. Additionally, the respective P2P IM applications 64 and 74 of the respective computerized devices 60 and 70, respectively, are in communication via a P2P IM network technology represented by way of a communication link 78. The P2P IM network technology that is used in any particular embodiment can vary and, in at least some embodiments, is an AOL instant messenger ("AIM") technology, a Microsoft-based instant messaging technology, and a Jabber-based instant messaging technology. Thus, the P2P IM applications 64, 74 can be any type of P2P IM application that is capable of operating in relation to the particular P2P IM network technology that is being used, e.g., the applications are AIM, Microsoft-based, or Jabber-based P2P IM applications.

In alternate embodiments, where the authenticated P2P applications are not P2P IM applications but are other types of applications, the communication link 78 would be representative of an authenticated networking connection having that type of format. Further, it will be understood that, although in many embodiments of the present invention the communication links 68, 78 follow two different types of P2P networking technologies, both links can and typically (albeit not necessarily) do operate by way of the same shared underlying communications hardware and software/protocols. That is, for example, supposing that the first computerized device 60 corresponds to the first cellular telephone 12 of FIG. 1, both the communications occurring by way of the P2P FS communication link 68 and the P2P IM communication link 78 would typically occur by way of the same wireless link 20 and by way of the Internet 18. Thus, while the links 68 and 78 are shown to be independent from one anther in FIG. 3, the links usually are achieved using the same, shared hardware and/or possibly some of the same software. At the same time, in alternate embodiments, it is also possible for the P2P FS network communications to occur by way of an entirely different medium than the P2P IM network communications or other authenticated communications.

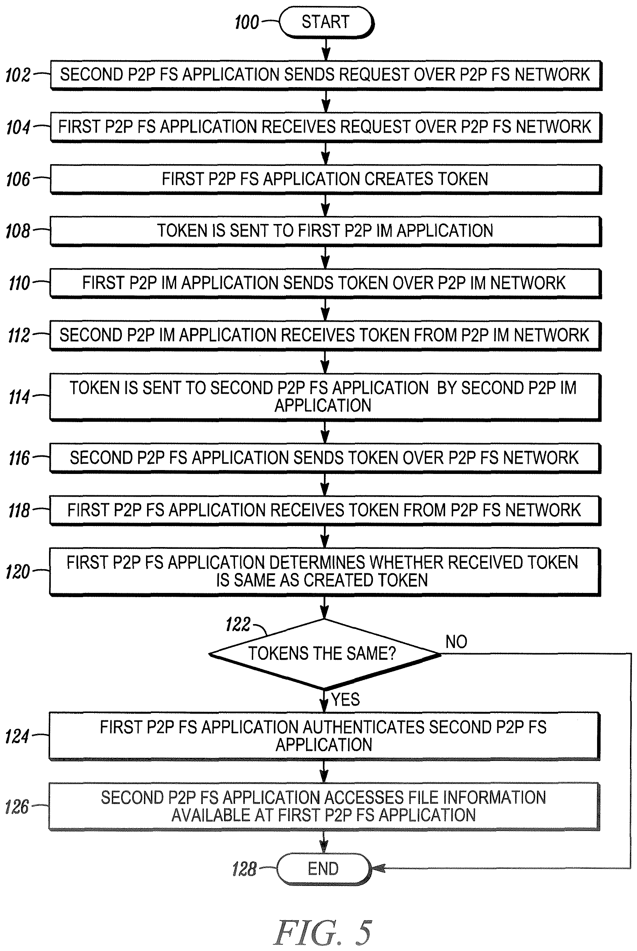

The mixed block/signal flow diagram of FIG. 3 not only shows applications that are operating on the computerized devices in accordance with certain embodiments of the present invention, but further shows a first particular manner of communications among the various applications of the computerized devices that allows those computerized devices to achieve P2P FS communications that are authenticated. This manner of communications is described below in detail with reference to both FIG. 3 and FIG. 5. As will be described, this manner of communications allows for the P2P FS application 62 of the first computerized device 60 to restrict access to its files (that it possesses or over which it otherwise has control) to only certain peers rather than to all possible peers who might attempt to link up with that P2P FS application by way of the P2P FS communication link 68. This manner of communications presupposes that the second P2P FS application 72 has identified the first P2P FS application 62 as having control over files that the second P2P FS application wishes to access, and that the second P2P FS application knows the address of the first P2P FS application. Thus, this manner of communications would be particularly desirable and appropriate in situations where a party has already identified an address of a P2P FS application at which desired (or potentially-desirable) files are located, for example, either because that party had already been provided with that address information (e.g., the party was provided with that address information by a friend) or because the party had identified the address information by way of a search that was conducted (e.g., an index search).

Referring then to FIGS. 3 and 5, intercommunications between the first and second computerized devices 60, 70 of FIG. 3 can take a first form as indicated by the steps of a flow chart in FIG. 5 and corresponding signals shown in FIG. 3. Starting at a step 100 of FIG. 5, the second P2P FS application 72 or the second computerized device 70 initially makes a determination that it would like to access the file contents of the P2P FS application 62 of the first computerized device 60. Therefore, at a step 102, the second P2P FS application 72 sends a request over the P2P FS communication link 68 to the address of the first P2P FS application 62. The signal transmitted in step 102 corresponds to a first signal 140 shown in FIG. 3 and, in particular, typically includes an indication of the P2P IM application 74 (or other authenticated application) with which the second P2P FS application 72 is associated (e.g., as shown in FIG. 2 "IM: user 2").

At a step 104 of FIG. 5, the first P2P FS application 62 in turn receives the signal communicated by the second P2P FS application 72. The first P2P FS application 62 (or another associated application) then at a step 106 creates a token, which can be a randomly generated code such as a randomly generated number or alphanumeric code, or alternately can be indicative of a user identifier, a node address and/or a time stamp (or could also be a combination of a randomly generated code with such other information). The token created at step 106 by the P2P FS application 62 in turn is sent by the first P2P FS application to the first P2P IM application 64, at a step 108. Also, the identity of the P2P IM application 74 is also forwarded on to the P2P IM application 64 along with the token. This corresponds to a signal 142 shown in FIG. 3 (e.g., "user 2+ token").

Next, at a step 110 of FIG. 5, the first P2P IM application 64 sends the token over the P2P IM communication link 78 to the second P2P IM application 74, the address of which is known to the P2P IM application 64 since it was passed to that application in step 108. The sending of the token over the P2P IM communication link 78 corresponds to a signal 144 shown in FIG. 3. As shown, in at least some embodiments the sending of the token is accompanied by an identifier of the first P2P FS application 62 (e.g., "node 1"), so that the second computerized device 70 upon receiving the token can associate its original request in step 102 with the incoming token.

At a step 112 of FIG. 5, the second P2P IM application 74 receives the token off of the P2P IM communication link 78. Then, at a step 114, the token is sent from the second P2P IM application 74 to the second P2P FS application 72 by way of the communication link 76, which corresponds to a signal 146 shown in FIG. 3. As with the signal 144, in at least some embodiments the signal 146 includes both the token and the identifier of the first P2P FS application (e.g., "node 1"). Further, at a step 116, the second P2P FS application 72 then sends an additional communication via the P2P FS communication link 68 to the first P2P FS application 62 that includes the token. The sending of this token in step 116 corresponds to a signal 148 shown in FIG. 3.

At a step 118, the first P2P FS application 62 receives the token off of the P2P FS communication link 68. Then, at an additional step 120 the first P2P FS application 62 determines whether the received token is the same as the token that was created in step 106. If, at a step 122, it is determined that the tokens are the same, then the first P2P FS application 62 authenticates the second P2P FS application 72, that is, the first P2P FS application recognizes the second P2P FS application as being an authorized accessing peer, and grants access to that second P2P FS application. Although not shown, in some embodiments, the granting of access is accompanied by the sending of a signal back from the first P2P FS application 62 to the second P2P FS application 72 announcing that access has been granted.

In any event, once access has been granted, the second P2P FS application 72 then is able to and typically does access file information that is available at the first P2P FS application 62, at a step 126. The accessing typically is conducted in a secured manner, and can be any of a variety of types of accessing including, for example, searching, browsing, downloading of files, and other accessing. The files that are accessed can be any type of file including, for example, data files (containing any of a variety of types of data such as those discussed above), and files containing applications, programs, or other software (including possibly operating system or other system software). Once the second P2P FS application 72 has completed its accessing of the first P2P FS application 62, then the routine is ended at a step 128. Also, in the event that the tokens are not the same as determined at step 122, then this is an indication either that an error in transmission has occurred or alternately that the P2P FS application attempting to access the first P2P FS application 62 is not that which is in fact associated with the second P2P IM application 74 and may be an imposter. Thus, in such case, access is not granted and the routine proceeds immediately from step 122 to the end step 128.

Turning now to FIG., 4, that figure is a mixed block/signal flow diagram that, like FIG. 3, also shows first and second computerized devices 80 and 90, respectively. The first and second computerized devices 80 and 90 again respectively have first and second P2P FS applications 82 and 92, respectively, and first and second authenticated applications that in the present embodiment are first and second P2P IM applications 84 and 94, respectively. Also similar to FIG. 3, the respective P2P FS applications 82, 92 are associated with and in communication with the respective P2P IM applications 84, 94 by way of respective communication links 86, and 96, respectively. Additionally, the P2P FS applications 82 and 92 of the computerized devices 80 and 90 are in communication by way of a P2P FS communication link 88, and the P2P IM applications 84, 94 of the computerized devices are coupled by way of a P2P IM communication link 98.

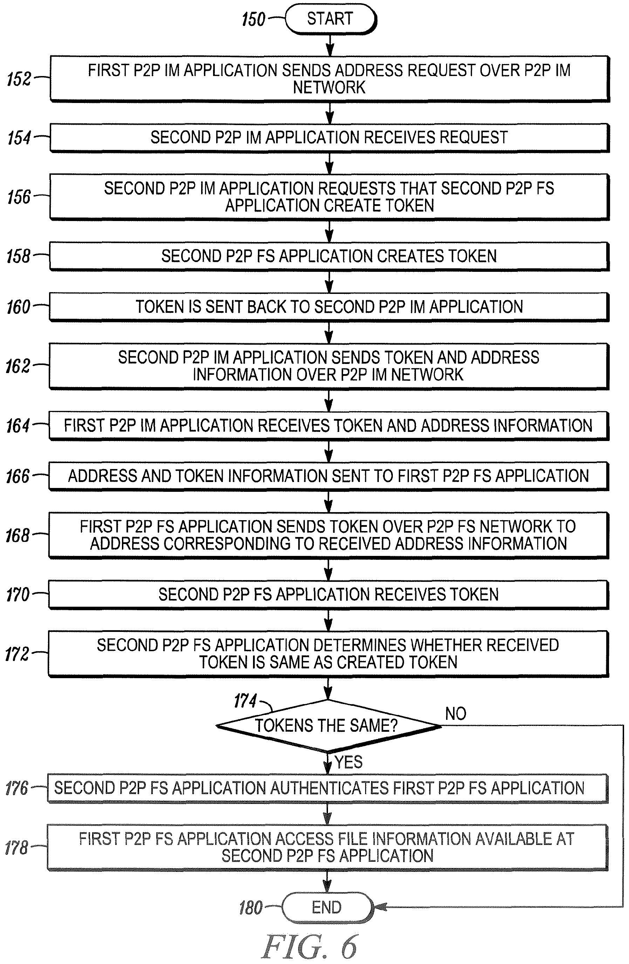

Although similar to FIG. 3, the mixed block/signal flow diagram provided in FIG. 4 shows a different possible manner of interaction and communication between the two computerized devices 80 and 90, which is described in further detail below with respect to both FIG. 4 and FIG. 6. As in the embodiment of FIGS. 3 and 5, the embodiment of FIGS. 4 and 6 makes it possible for a P2P FS application (specifically, the P2P FS application 92) to restrict access to its contents by other P2P FS applications. However, in this embodiment, the P2P FS application (application 82) seeking access to file contents does not have the address of the P2P FS application (application 92) at which the files are stored/available. Rather, the P2P FS application seeking access to files (or the computerized device with which it is associated) has information regarding the identity of the computerized device at which the desired (or potentially desirable) file information is stored/available and knows how to contact the authenticated application (e.g., the second P2P IM application 94) of that computerized device at which the file information is stored/available (e.g., computerized device 90).

In this circumstance, the party seeking file information also typically does not know the particular file names of interest, but rather only knows that files of interest are available at a particular computerized device (e.g., at the computerized device 90). Thus, the manner of operation shown in FIGS. 4 and 6 would be particularly desirable and appropriate in circumstances where a party recognizes that another party has desirable file information on that party's computerized device but at the same time does not know with specificity the names of those files or the address of the other party's P2P FS application but rather only knows the identity of that other party and how to communicate with that other party's P2P IM application (or other authenticated application). This could occur, for example, in an instance where a first person had a friend and the first person knew that desired file information (e.g., audio files or photographic files) were available at that friend's cellular telephone or computer, but at the same time did not know the particular names of the files or the address of the P2P FS application at the friend's computerized device.

Referring thus to FIGS. 4 and 6, an alternate manner of intercommunications between the first and second computerized devices 80 and 90, which differs from that of FIGS. 3 and 5, proceeds as follows. Beginning at a step 150, operation starts with the first computerized device 80 of FIG. 4 (or its user) determining that it would like to access files available at the P2P FS application of the second computerized device 90, and at the same time recognizing that it does not have the P2P FS network address of the P2P FS application 92. Since the computerized device 80 (or its user) knows how to contact the computerized device 90 by way of the P2P IM communication link 98, at a step 152 the first computerized device 80 causes its P2P IM application (P2P IM application 84) to send an address request over the P2P IM communication link 98 to the second P2P IM application 94 of the second computerized device 90. The sending of this request corresponds to a first signal 190 shown in FIG. 4. Also, in some alternate embodiments, prior to the sending of the request in step 152, the P2P FS application of the first computerized device 80 could have initiated the process by sending an address request to its associated P2P IM application.

Next, at a step 154 of FIG. 6, the second P2P IM application 94 receives the request off of the P2P IM communication link 98 and, in response, at a step 156, sends a further request to its associated P2P FS application 92 to create a token. The sending of this request occurs by way of the communication link 96 between the two applications 92 and 94 and corresponds to a signal 192 shown in FIG. 4. As shown in FIG. 4, in at least some embodiments the second P2P IM application 94 making the token request will send an identifier of the P2P IM application 84 that made the original address request in step 152 (e.g., "generate token for IM:user1").

Next, at a step 158, the second P2P FS application 92 creates a token. The token can be any of the types of codes discussed above with reference to FIGS. 3 and 5. In the present embodiment, the token is accompanied by or itself includes the address (in this case, "address 2") of the second P2P FS application 92 on the P2P FS network. As will be discussed below, this information is later used by the first computerized device 80 to contact the second P2P FS application 92 (this was the address information that the first computerized device lacked at the start of the process). The address of an application (or "node") is typically either its IP address plus a port number (the IP address often but not necessarily being the same as that of the associated IM application) or a type of address specific to the FS protocol. For example, on a Gnutella2 protocol a firewalled node is identified by its GUID and the IP/port number of a hub to which it is connected.

Then, in a step 160, the token and any appropriate accompanying information is sent back from the second P2P FS application 92 to the second P2P IM application 94, again by way of the communication link 96. This sending corresponds to a signal 194 shown in FIG. 4. As also shown in FIG. 4, in the present embodiment the token provided in step 160 not only includes (or is accompanied by) the address information regarding the address of the P2P FS application 92, but also is accompanied by or includes the identifier of the first P2P IM application 84 that made the original request in step 152 (e.g., "user 1"). Inclusion of this identifier as part of the overall token information that is provided (e.g., "address2+user 1: token") alleviates any confusion regarding which P2P IM application initiated the process at step 152 and is expecting to receive address information concerning the second P2P FS application 92.

Next, at a step 162, the second P2P IM application 94 sends the token over the P2P IM communication link 98 to the first P2P IM application 84. Additionally, in step 162 the second P2P IM application 94 also sends the address of the P2P FS application 92 and also the identifier of the P2P IM application 84 to the first P2P IM application 84, either as part of the token or independently of the token. The sending of this information (e.g., "address2 + user1:token") corresponds to a signal 196 shown in FIG. 4. Then, at a step 164 of FIG. 6, the first P2P IM application 84 receives the token and accompanying information. Subsequently, this token and accompanying information is further provided to the first P2P FS application 82 by way of the communication link 86, at a step 166. The provision of this information corresponds to a signal 198 shown in FIG. 4.

Next, at a step 168 of FIG. 6, the first P2P FS application 82 attempts to enter into communications with the second P2P FS application 92 by sending the token over the P2P FS communication link 88 to the P2P FS network address corresponding to the address information that it received in step 166. The sending of this information corresponds to a signal 200 shown in FIG. 4. In the present embodiment, the token information is accompanied by the identifier of the first P2P IM application 84 that initiated the process in step 152, whose identity is known to the second P2P FS application 92 that generated the token (e.g., "IM:user1"). Next, at a step 170, the second P2P FS application 92 receives the information and then, at a step 172, the second P2P FS application determines whether the received token is the same as the token that was created in step 158. If the tokens are the same as determined at a step 174, then the second P2P FS application 92 at a step 176 authenticates the first P2P FS application 82 and grants access of its files thereto. Thus, at a step 178, the first P2P application 82 then accesses the file information available at the second P2P FS application 92, typically in a secured manner. When all accessing is complete, then the routine is ended at a step 180. However, if the tokens are not the same as determined at step 174, then this is an indication to the second computerized device 90 that either an error has occurred or that the P2P FS application attempting to access its contents is not associated with the P2P IM application that requested the token and address information and may be an impostor.

It should be mentioned that, in the embodiments discussed above with reference to FIGS. 3-6, whether a particular P2P FS application grants access in steps 124 and 176 typically depends upon predetermined access rights that have been given for different P2P FS application programs. Various levels or types of access are possible, for example, a user can browse the directory of another IM user, or search content by keywords or by metadata in one of several user repositories. Permissions for every file or every folder shared by an FS application can be set depending on IM users. The sending of messages for authentication is an automatic process used only for private files and with authorized users. Any other request of authentication will be ignored in order to keep anonymity on the FS network. In some (but not all) embodiments, the FS and IM applications can be unified in a single application. There can be files or a list of shared content. The embodiment of FIGS. 4 and 6, in particular, can be used to browse a friend's content repository or download a file that is being made available by the friend for sharing purposes.

Although FIGS. 3-6 show two possible alternative manners of operating computerized devices so as to achieve a P2P FS network that includes an authentication mechanism by which only authorized peers or users can access certain restricted or private data, the present invention is also intended to encompass numerous modifications and variations on these manners of operation. For example, in at least some embodiments, the tokens created by the P2P FS applications at which file information is stored can represent different levels of access that are appropriate for different types of users. Thus, in some embodiments, certain users will be granted access rights to all of the files stored on a given computerized device whereas other users are granted access to only limited numbers of those files. Also, in at least some embodiments, to keep the invention largely consistent with the goal of allowing widespread P2P file sharing, access rights are communicated to any peer that retrieves or has retrieved a given file so that it can redistribute the file to authorized users.

Various embodiments of the present invention can provide a number of different advantages. To begin with, various embodiments of the present invention allow a given P2P FS application to restrict or limit access to a file stored at it, and further provide this capability without modifying the normal manner of P2P communications by associating the FS application with an authenticating application such as an IM application. As a result, users of the computerized devices employing these concepts can attain advantages that arise from each of the P2P FS applications and the P2P IM applications. Further, in at least some embodiments of the present invention (e.g., those associated with FIGS. 4 and 6), it becomes possible for users to identify their IM friends on the FS network, and to share content with those friends specifically. Use of an existing IM system as the authenticating applications also can provide an advantage to users who already employ that existing system, such that they will not have to search for friends on a new system. The above described processes can also be extended to work on several IM systems at the same time. Embodiments of the present invention also allow for the creation of a decentralized storage space for private files, and can allow for the providing of a variety of rights to files and more bandwidth.

It is specifically intended that the present invention not be limited to the embodiments and illustrations contained herein, but include modified forms of those embodiments including portions of the embodiments and combinations of elements of different embodiments as come within the scope of the following claims.

## Claims

1. A method of authenticating a first peer-to-peer, P2P, file sharing application (72), the method comprising:
a) providing an identifier from a second P2P file sharing application (62) to a second authenticated P2P application (64) associated therewith;
b) transmitting the identifier directly from the second authenticated P2P application (64) for receipt by a first P2P authenticated application (74) and subsequently by the first P2P file sharing application (72) with which the first authenticated P2P application (74) is associated;
c) receiving the identifier at the second P2P file sharing application (62) from the first P2P file sharing application (72) subsequent to the transmitting of the identifier in b); and
d) authenticating the first P2P file sharing application (72) if the identifier received in c) corresponds to that provided in a).

2. The method of claim 1, wherein b) includes:
communicating the identifier from the second authenticated P2P application (64) to the first authenticated P2P application (74), and communicating the identifier from the first authenticated P2P application (74) to the first P2P file sharing application (72).

3. The method of claim 1, wherein in b) the identifier is transmitted by the second authenticated P2P application (64) onto a wide-area network (18) for receipt by the first authenticated P2P application (74).

4. The method of claim 3, wherein in c) the second P2P file sharing application (62) receives the identifier off of the wide-area network (18).

5. The method of claim 4, wherein the transmitting in b) or the receiving in c) is achieved through use of a wireless communications medium (78, 68).

6. The method of claim 3, wherein the wide-area network (18) is the internet.

7. The method of claim 1, further comprising, prior to a): receiving a first signal (140) from the first P2P file sharing application (72) at the second P2P file sharing application (62), in response to which the identifier is provided by the second P2P file sharing application (62) in a).

8. The method of claim 1, further comprising,
prior to a):
receiving a first signal from the first authenticated P2P application (74) at the second authenticated P2P application (64), wherein the first signal includes a request for an address of the second P2P file sharing application (62) associated with the second authenticated P2P application (64), and wherein the step b) of transmitting directly further comprises transmitting directly the address of the second P2P file sharing application (62) for receipt by the first P2P file sharing application (72) together with said identifier

9. The method of claim 1, wherein the identifier is a token that is a random number or a code that is indicative of a user identifier, a node address or a timestamp.

10. The method of claim 9, wherein when the token is a random number, the random number is stored by the second P2P file sharing application (62) and associated with a node, and when the token is the code, the code includes a signed message.

11. The method of claim 1, wherein the first and second authenticated P2P applications (74, 64) are respective first and second P2P instant messaging system applications.

12. The method of claim 11, wherein each of the P2P instant messaging system applications communicates in accordance with a Jabber-based format, a Microsoft-based format, an AOL Instant Messenger, AIM, format or an other instant messaging format.

13. The method of claim 1, further comprising, subsequent to (d)
transmitting information from the second P2P file sharing application (62) to the first P2P file sharing application (72), wherein the transmitted information includes directory information, textual information, audio information, graphical information, or video information.

14. An apparatus allowing for authentication of a first peer-to-peer, P2P, file sharing application (72; 82), the apparatus comprising:
a processing device (60; 90) on which is operating a second P2P file sharing application (62; 92) and a second authenticated P2P application (64; 94) that is associated with the second P2P file sharing application (62; 92),
wherein the second P2P file sharing application (62; 92) is configured to provide an identifier to the second authenticated P2P application (64; 94), and the second authenticated program (64; 94) is configured to transmit the identifier directly to a first authenticated P2P application (74; 84) associated with the first P2P file sharing application (72; 82), and
wherein the authentication of the first P2P file sharing application (72; 82) occurs after the second P2P file sharing application (62; 92) receives the identifier back from the first P2P file sharing application (72; 82).

15. The apparatus of claim 14, further comprising an output terminal (32) by which the second authenticated P2P application (64) transmits the identifier onto a wide-area network (18) for receipt by the first authenticated P2P application (74), and an input terminal (32) by which the second P2P file sharing application (62) receives the identifier from the first P2P file sharing application.

16. The apparatus of claim 14, wherein the apparatus is selected from the group consisting of a personal computer (16), a cellular telephone (12), a personal digital assistant and another wireless communications device, and wherein the processing device includes a microprocessor.

17. A system including the apparatus of claim 14 and further comprising an additional processing device (70; 80) on which is operating the first P2P file sharing application (72; 82) and the first authenticated P2P application (74; 84), and wherein the second P2P file sharing application (62; 92) is configured to provide the identifier in response to receipt of a first signal (140; 200) from the first P2P file sharing application (72; 82) by the second P2P file sharing application (62; 92), or receipt of a second signal (190) from the first authenticated P2P application (84) by the second authenticated P2P application (94).

18. The system of claim 17, further comprising means for generating a token that is included as at least part of the identifier.

19. The system of claim 17, wherein each of the first and second authenticated P2P application (74, 64) is an instant messaging system application that allows for secured communications, and wherein subsequent to the authentication of the first P2P file sharing application (72) the first and second P2P file sharing applications (72, 62) are capable of communicating in a secured manner.

20. The system of claim 17, wherein upon the authentication of the first P2P file sharing application (72), access rights are provided to the first P2P file sharing application (72) allowing the first P2P file sharing application (72) to grant access to at least one other application.

## Patentansprüche

1. Verfahren zum Authentifizieren einer ersten Peer-to-Peer-, P2P, Filesharing-Anwendung (72), wobei das Verfahren Folgendes umfasst:
a) Bereitstellen eines Identifikators von einer zweiten P2P-Filesharing-Anwendung (62) zu einer zweiten authentifizierten P2P-Anwendung (64), die damit zugeordnet ist;
b) Übertragen des Identifikators direkt von der zweiten authentifizierten P2P-Anwendung (64) zum Empfang durch eine erste authentifizierte P2P-Anwendung (74), und anschließend durch die erste P2P-Filesharing-Anwendung (72), der die erste authentifizierte P2P-Anwendung (74) zugeordnet ist;
c) Empfangen des Identifikators an der zweiten P2P-Filesharing-Anwendung (62) von der ersten P2P-Filesharing-Anwendung (72) im Anschluss an die Übertragung des Identifikators in b); und
d) Authentifizieren der ersten P2P-Filesharing-Anwendung (72), wenn der in c) empfangene Identifikator dem in a) bereitgestellten entspricht.

2. Verfahren nach Anspruch 1, wobei b) Folgendes umfasst:
Kommunizieren des Identifikators von der zweiten authentifizierten P2P-Anwendung (64) zu der ersten authentifizierten P2P-Anwendung (74), und Kommunizieren des Identifikators von der ersten authentifizierten P2P-Anwendung (74) zu der ersten P2P-Filesharing-Anwendung (72).

3. Verfahren nach Anspruch 1, wobei in b) der Identifikator durch die zweite authentifizierte P2P-Anwendung (64) an ein weitreichendes Netzwerk (18) zum Empfang durch die erste authentifizierte P2P-Anwendung (74) übertragen wird.

4. Verfahren nach Anspruch 3, wobei in c) die zweite P2P-Filesharing-Anwendung (62) den Identifikator außerhalb des weitreichenden Netzwerks (18) empfängt.

5. Verfahren nach Anspruch 4, wobei das Übertragen in b) oder das Empfangen in c) durch Verwendung eines drahtlosen Kommunikationsmediums (78, 68) erzielt wird.

6. Verfahren nach Anspruch 3, wobei das weitreichende Netzwerk (18) das Internet ist.

7. Verfahren nach Anspruch 1, ferner umfassend vor a):
Empfangen eines ersten Signals (140) von der ersten P2P-Filesharing-Anwendung (72) bei der zweiten P2P-Filesharing-Anwendung (62), in Antwort worauf der Identifikator durch die zweite P2P-Filesharing-Anwendung (62) in a) bereitgestellt wird.

8. Verfahren nach Anspruch 1, ferner umfassend vor a):
Empfangen eines ersten Signals von der ersten authentifizierten P2P-Anwendung (74) bei der zweiten authentifizierten P2P-Anwendung (64), wobei das erste Signal eine Anfrage für eine Adresse der zweiten P2P-Filesharing-Anwendung (62) in Zuordnung zu der zweiten authentifizierten P2P-Anwendung (64) enthält, und wobei der Schritt b) des direkten Übertragens ferner ein direktes Übertragen der Adresse der zweiten P2P-Filesharing-Anwendung (62) zum Empfang durch die erste P2P-Filesharing-Anwendung (72) zusammen mit dem Identifikator umfasst.

9. Verfahren nach Anspruch 1, wobei der Identifikator ein Token ist, das eine Zufallszahl oder ein Code ist, die/der einen Benutzeridentifikator, eine Knotenadresse oder einen Zeitstempel angibt.

10. Verfahren nach Anspruch 9, wobei dann, wenn der Token eine Zufallszahl ist, die Zufallszahl durch die zweite P2P-Filesharing-Anwendung (62) gespeichert wird und einem Knoten zugeordnet wird, und wenn der Token der Code ist, der Code eine signierte Nachricht enthält.

11. Verfahren nach Anspruch 1, wobei die erste und die zweite authentifizierte P2P-Anwendung (74, 64) eine erste beziehungsweise eine zweite P2P-Instant-Messaging-Systemanwendung ist.

12. Verfahren nach Anspruch 11, wobei jede der P2P-Instant-Messaging-Systemanwendungen in Übereinstimmung mit einem Jabber-basierten Format, einem Microsoft-basierten Format, einem AOL Instant Messenger-, AIM-, Format oder einem anderen Instant-Messaging-Format kommuniziert.

13. Verfahren nach Anspruch 1, ferner umfassend in Anschluss an (d) ein Übertragen von Information von der zweiten P2P-Filesharing-Anwendung (62) zu der ersten P2P-Filesharing-Anwendung (72), wobei die übertragene Information Verzeichnisinformation, Textinformation, Audioinformation, graphische Information oder Videoinformation enthält.

14. Gerät, das eine Authentifizierung einer ersten Peer-to-Peer-, P2P-, Filesharing-Anwendung (72; 82) erlaubt, wobei das Gerät umfasst:
eine Verarbeitungsvorrichtung (60; 90), auf der eine zweite P2P-Filesharing-Anwendung (62; 92) und eine zweite authentifizierte P2P-Anwendung (64; 94) operieren, die der zweiten P2P-Filesharing-Anwendung (62; 92) zugeordnet ist,
wobei die zweite P2P-Filesharing-Anwendung (62; 92) dazu ausgelegt ist, einen Identifikator zu der zweiten authentifizierten P2P-Anwendung (64; 94) bereitzustellen, und wobei das zweite authentifizierte Programm (64; 94) dazu ausgelegt ist, den Identifikator direkt zu einer ersten authentifizierten P2P-Anwendung (74; 84) zu übertragen, die der ersten P2P-Filesharing-Anwendung (72; 82) zugeordnet ist, und
wobei die Authentifizierung der ersten P2P-Filesharing-Anwendung (72; 82) erfolgt nachdem die zweite P2P-Filesharing-Anwendung (62; 92) den Identifikator von der ersten P2P-Filesharing-Anwendung (72; 82) zurück empfängt.

15. Gerät nach Anspruch 14, ferner umfassend ein Ausgabeterminal (32), durch das die zweite authentifizierte P2P-Anwendung (64) den Identifikator an ein weitreichendes Netzwerk (18) zum Empfang durch die erste authentifizierte P2P-Anwendung (74) überträgt, sowie ein Eingabeterminal (32), durch das die zweite P2P-Filesharing-Anwendung (62) den Identifikator von der ersten P2P-Filesharing-Anwendung empfängt.

16. Gerät nach Anspruch 14, wobei das Gerät ausgewählt ist aus der Gruppe bestehend aus einem Personal Computer (16), einem Mobiltelefon (12), einem persönlichen digitalen Assistenten und einer anderen drahtlosen Kommunikationsvorrichtung, und wobei die Verarbeitungsvorrichtung einen Mikroprozessor enthält.

17. System, das das Gerät nach Anspruch 14 enthält, und das ferner eine zusätzliche Verarbeitungsvorrichtung (70; 80) umfasst, auf der die erste P2P-Filesharing-Anwendung (72; 82) und die erste authentifizierte P2P-Anwendung (74; 84) operieren, und wobei die zweite P2P-Filesharing-Anwendung (62; 92) dazu ausgelegt ist, den Identifikator in Antwort auf einen Empfang eines ersten Signals (140; 200) von der ersten P2P-Filesharing-Anwendung (72; 82) durch die zweite P2P-Filesharing-Anwendung (62; 92) oder einen Empfang eines zweiten Signals (190) von der ersten authentifizierten P2P-Anwendung (64) durch die zweite authentifizierte P2P-Anwendung (94) bereitzustellen.

18. System nach Anspruch 17, ferner umfassend Mittel zum Generieren eines Tokens, der wenigstens als Teil des Identifikators enthalten ist.

19. System nach Anspruch 17, wobei jede von der ersten und der zweiten authentifizierten P2P-Anwendung (74, 64) eine Instant-Messaging-Systemanwendung ist, die gesicherte Kommunikationen ermöglicht, und wobei im Anschluss an die Authentifizierung der ersten P2P-Filesharing-Anwendung (72) die erste und die zweite P2P-Filesharing-Anwendung (72, 62) in der Lage sind, in einer gesicherten Weise zu kommunizieren.

20. System nach Anspruch 17, wobei bei der Authentifizierung der ersten P2P-Filesharing-Anwendung (72) Zugangsrechte an die erste P2P-Filesharing-Anwendung (72) bereitgestellt werden, die es der ersten P2P-Filesharing-Anwendung (72) ermöglichen, einen Zugang zu wenigstens einer anderen Anwendung zu gestatten.

## Revendications

1. Procédé d'authentification d'une première application de partage de fichiers peer-to-peer, P2P (72), le procédé comprenant :
a)
la fourniture d'un identifiant à partir d'une seconde application de partage de fichiers P2P (62) à une seconde application P2P authentifiée (64) qui lui est associée ;
b)
la transmission de l'identifiant directement à partir de la seconde application P2P authentifiée (64) pour réception par une première application P2P authentifiée (74) et ensuite par la première application de partage de fichiers P2P (72) avec laquelle la première 10 application P2P authentifiée (74) est associée ;
c)
la réception de l'identifiant au niveau de la seconde application de partage de fichiers P2P (62) à partir de la première application de partage de fichiers P2P (72) à la suite de la transmission de l'identifiant en b) ; et
d)
l'authentification de la première application de partage de fichiers P2P (72) si l'identifiant reçu en c) correspond à celui fourni en a).

2. Procédé selon la revendication 1, dans lequel b) inclut :
la communication de l'identifiant de la seconde application P2P authentifiée (64) à la première application P2P authentifiée (74), et la communication de l'identifiant à partir de la première application P2P authentifiée (74) à la première application de partage de fichiers P2P (72).

3. Procédé selon la revendication 1, dans lequel, en b), l'identifiant est transmis par la seconde application P2P authentifiée (64) sur un réseau étendu (18) pour sa réception par la première application P2P authentifiée (74) .

4. Procédé selon la revendication 3, dans lequel en c), la seconde application de partage de fichiers P2P (62) reçoit l'identifiant hors du réseau étendu (18).

5. Procédé selon la revendication 4, dans lequel la transmission en b) ou la réception en c) est réalisée par l'utilisation d'un support de communication sans fil (78, 68) .

6. Procédé selon la revendication 3, dans lequel le réseau étendu (18) est l'Internet.

7. Procédé selon la revendication 1, comprenant en outre, avant a) :
la réception d'un premier signal (140) de la première application de partage de fichiers P2P (72) au niveau de la seconde application de partage de fichiers P2P (62), en réponse à quoi l'identifiant est fourni par la seconde
application de partage de fichiers P2P (62) en a).

8. Procédé selon la revendication 1, comprenant en outre, avant a) :
la réception d'un premier signal de la première application P2P authentifiée (74) au niveau de la seconde application P2P authentifiée (64), dans lequel le premier signal comprend une demande d'adresse de la seconde application de partage de fichiers P2P (62) associée à la seconde application P2P authentifiée (64), et dans lequel l'étape b) de la transmission directe comprend en outre la transmission directe de l'adresse de la seconde application de partage de fichiers P2P (62) pour réception par la première application de partage de fichiers P2P (72) avec ledit identificateur.

9. Procédé selon la revendication 1, dans lequel l'identifiant est un jeton qui est un nombre aléatoire ou un code indicatif d'un identifiant d'utilisateur, d'une adresse de noeud ou d'un horodateur.

10. Procédé selon la revendication 9, dans lequel lorsque le jeton est un nombre aléatoire, le nombre aléatoire est stocké par la seconde application de partage de fichiers P2P (62) et associé à un noeud, et lorsque le jeton est le code, le code inclut un message signé.

11. Procédé selon la revendication 1, dans lequel les première et seconde applications P2P authentifiées (74, 64) sont les première et seconde applications respectives du système de messagerie instantanée P2P.

12. Procédé selon la revendication 11, dans lequel chacune des applications du système de messagerie instantanée P2P communique conformément à un format basé sur Jabber, un format basé sur Microsoft, une Messagerie Instantanée AOL, format AIM, ou un autre format de messagerie instantanée.

13. Procédé selon la revendication 1, comprenant en outre, après (d) la transmission d'informations à partir de la seconde application de partage de fichiers P2P (62) à la première application de partage de fichiers P2P (72), dans lequel les informations transmises comprennent des informations de répertoire, des informations textuelles, des informations audio, des informations graphiques ou des informations vidéo.

14. Appareil permettant l'authentification d'une première application de partage de fichiers peer-to-peer, P2P, (72; 82), comprenant :
un dispositif de traitement (60; 90) sur lequel fonctionne une seconde application de partage de fichiers P2P (62; 92) et une seconde application P2P authentifiée (64; 94) qui est associée à la seconde application de partage de fichiers P2P (62; 92),
dans lequel la seconde application de partage de fichiers P2P (62; 92) est configurée pour fournir un identifiant à la seconde application P2P authentifiée (64; 94), et le second programme authentifié (64; 94) est configuré pour transmettre l'identifiant directement à une première application P2P authentifiée (74; 84) associée à la première application de partage de fichiers P2P (72; 82), et
dans lequel l'authentification de la première application de partage de fichiers P2P (72; 82) a lieu après que la seconde application de partage de fichiers P2P (62; 92) reçoit l'identifiant en retour à partir de la première application de partage de fichiers P2P (72; 82).

15. Appareil selon la revendication 14, comprenant en outre un terminal de sortie (32) par lequel la seconde application P2P authentifiée (64) transmet l'identifiant sur un réseau étendu (18) pour réception par la première application P2P authentifiée (74), et un terminal d'entrée (32) par lequel la seconde application de partage de fichiers P2P (62) reçoit l'identifiant à partir de la première application de partage de fichiers P2P.

16. Appareil selon la revendication 14, dans lequel l'appareil est sélectionné à partir du groupe constitué d'un ordinateur personnel (16), d'un téléphone cellulaire (12), d'un assistant numérique personnel et d'un autre dispositif de communication sans fil, et dans lequel le dispositif de traitement comprend un microprocesseur.

17. Système comprenant l'appareil selon la revendication 14 et comprenant en outre un dispositif de traitement supplémentaire (70; 80) sur lequel fonctionne la première application de partage de fichiers P2P (72; 82) et la première application P2P authentifiée (74; 84), et dans lequel la seconde application de partage de fichiers P2P (62; 92) est configurée pour fournir l'identifiant en réponse à la réception d'un premier signal (140; 200) à partir de la première application de partage de fichiers P2P (72; 82) par la seconde application de partage de fichiers P2P (62 ; 92) ou à la réception d'un deuxième signal (190) à partir de la première application P2P authentifiée (84) par la seconde application P2P authentifiée (94).

18. Système selon la revendication 17, comprenant en outre un moyen pour générer un jeton qui est compris en tant qu'au moins une partie de l'identifiant.

19. Système selon la revendication 17, dans lequel chacune des première et seconde applications P2P authentifiées (74, 64) est une application de système de messagerie instantanée qui permet des communications sécurisées, et dans lequel après l'authentification de la première application de partage de fichiers P2P (72), les première et seconde applications de partage de fichiers P2P (72, 62) sont capables de communiquer de manière sécurisée.

20. Système selon la revendication 17, dans lequel, lors de l'authentification de la première application de partage de fichiers P2P (72), des droits d'accès sont fournis à la première application de partage de fichiers P2P (72), permettant à la première application de partage de fichiers P2P (72) d'accorder l'accès à au moins une autre application.
